(19) Europäisches Patentamt

European Patent Office

Office européen des brevets

(11) Veröffentlichungsnummer: **0 416 324 A2**

# (12) EUROPÄISCHE PATENTANMELDUNG

(21) Anmeldenummer: **90115446.8**

(22) Anmeldetag: **11.08.90**

(51) Int. Cl.5: **G11B 5/68**

(30) Priorität: **05.09.89 CH 3224/89**

(43) Veröffentlichungstag der Anmeldung:
**13.03.91 Patentblatt 91/11**

(84) Benannte Vertragsstaaten:
**AT BE CH DE FR GB LI**

(71) Anmelder: **WILLI STUDER AG Fabrik für
elektronische Apparate
Althardstrasse 30
CH-8105 Regensdorf ZH(CH)**

(72) Erfinder: **Zwicky, Paul
Channelstrasse 4
CH-8157 Dielsdorf(CH)**
Erfinder: **Zbinden, Matthias
Holenbachstrasse 3
CH-8105 Regensdorf(CH)**

(74) Vertreter: **Ellenberger, Maurice
Willi Studer AG Althardstrasse 30
CH-8105 Regensdorf(CH)**

(54) **Magnetisches Speichermedium.**

(57) Um bei einem magnetischen Speichermedium fuer analoge Signalaufzeichnung bei gleichem Klirrfaktor den Pegel oder die Dynamik und den Rauschabstand verbessern zu koennen, werden bestimmte Vorschriften fuer die Beschaffenheit der magnetischen Teilchen im Speichermedium gemacht. Demnach sollen diese Teilchen aus mindestens zwei Sorten bestehen, wobei die Teilchen einer Sorte unter sich gleichen Aufbau haben. Ferner soll die Verteilungskurve (9), die angibt wieviele Teilchen eine bestimmte Koerzitivfeldstaerke aufweisen, im Bereiche (20) der am haeufigsten vorkommenden Koerzitivfeldstaerke ($H_{c9}$) im Vergleich zu einer Gauss'schen Verteilung verbreitert sein.

Fig.3

# MAGNETISCHES SPEICHERMEDIUM

Die Erfindung betrifft ein magnetisches Speichermedium zum Speichern analoger Signale, mit magnetisierten Teilchen, deren Koerzitivfeldstaerke eine Streuung um einen mittleren Wert aufweist.

Bekannte Speichermedien oder Aufzeichnungstraeger wie beispielsweise Magnetbaender, Magnetkarten oder Magnetplatten io bestehen aus einem Traegermaterial wie beispielsweise Kunststoff und einer darauf angebrachten magnetisierbaren Schicht. Diese Schicht besteht beispielsweise aus einem Bindemittel in das eine vielzahl magnetisierbarer Teilchen eingebunden ist. Diese Teilchen koennen zum Speichern eines Signales verwendet werden, indem sie durch ein Magnetfeld gebietsweise ueberwiegend mit gleicher polaritaet ummagnetisiert werden. Die Magnetisierung solcher Teilchen unterliegt einem an sich bekannten physikalischen Gesetz, das durch die bekannte magnetische Zustandskurve ausgedruekt wird, die die Erhoehung der magnetischen Flussdichte der magnetisierten Teilchen als Folge der angelegten Feldstaerke angibt. Demnach folgt die magnetische Flussdichte der Teilchen zuerst einer sogenannten Neukurve und erreicht die Saettigung. Bei nachfolgenden ummagnetisierungen durchlaeuft die Flussdichte als Funktion der anglegten Feldstaerke andere Kurven und es gilt nun mit der bekannten Hystereseschleife zu rechnen.

Um ein Signal moeglichst ohne Verzerrungen auf dem Aufzeichnungstraeger zu speichern, wuenscht man sich einen moeglichst linearen Zusammenhang zwischen der angelegten Feldstaerke und der daraus resultierenden Flussdichte der Teilchen auf dem Aufzeichnungstraeger oder zwischen dem erregenden Signalfeld und der gespeicherten Magnetisierung. Um dies zu erreichen wurde bisher das aufzuzeichnende Wechselstromsignal einer Gleichstrom-Vormagnetisierung ueberlagert. Damit ergab sich zwar der erwuenschte lineare Zusammenhang solange das erregende Signal feld zwischen unteren und oberen Extremwerten oszillierte, die einen Bereich begrenzten, dessen Betrag nicht viel groesser war als der Betrag der Gleichstrom Vormagnetisierung. Die Gleichstrom-Vormagnetisierung bewirkte aber ein starkes Rauschen.

Spaeter ging man dazu ueber, dem erregenden Signalfeld eine Wechselstrom-Vormagnetisierung zu ueberlagern. Diese hat eine hoehere Frequenz und Amplitude als das aufzuzeichnende Signal. Sie bewirkt, dass die einzelnen Teilchen bis zur Saettigung positiv oder negativ magnetisiert werden. Doch bleibt auch hier der Bereich, in welchem der Zusammenhang zwischen dem erregenden Magnetfeld und der gespeicherten Magnetisierung linear ist, beschraenkt. Zudem werden an solche Aufzeichnungen noch weitere Anforderungen gestellt. Beispielsweise sollte der Pegel des aufgezeichneten Signales moeglichst hoch sein und trotzdem sollte die gegenseitige Beeinflussung der Teilchen bei aufeinandergelegten Aufzeichnungstraegern gering sein.

Um solche unerwuenschte Effekte zu vermeiden und wuenschbare Effekte zu verstaerken, wurde in der EP-A-0105079 vorgeschlagen, die Konzentration der Teilchen auf dem Aufzeichnungstraeger zu erhoehen. Eine weitere Massnahme ist aus der DE-B-2556188 bekannt. Demnach wuerde bei Aufzeichnungstraegern mit magnetisierbaren Teilchen, die in mehreren Schichten, mit verschiedenen Eigenschaften der Teilchen in jeder Schicht, aufgetragen sind, die Frequenzcharakterstik verbessert.

So vorteilhaft die bisher vorgeschlagenen Verbesserungen auch sind, weitere Verbesserungen sind gewuenscht. Daher die heute eingeleitete Tendenz zu digitaler Aufzeichnungstechnik. Diese ermoeglicht die gewuenschten Verbesserungen, ist aber sehr aufwendig und anfaellig. Ferner sind die Normen fuer digitale Aufzeichnung nicht genuegend etabliert. Verbraucher mit grossen Archieven wollen deshalb mit der Einfuehrung der digitalen Aufzeichnungstechnik noch warten, bis Gewaehr besteht, dass sich die Norm nicht mehr aendert und die fuer die Archivierung notwendige Stabilitaet der Baender gewaehrleistet ist. Eine Verbesserung der analogen Aufzeichnung ist deshalb wuenschenswert.

Die Erfindung, wie sie in den Anspruechen gekennzeichnet ist, loest die Aufgabe, ein magnetisches Speichermedium mit magnetischen Teilchen zu schaffen, das bei analoger Aufzeichnung den linearen Zusammenhang zwischen dem erregenden aufzuzeichnenden Signalfeld und der im Speichermedium gespeicherten Magnetisierung zu verbessern und insbesondere zu erweitern erlaubt.

Gemaess der Erfindung wird dies erreicht, indem derartige magnetisierte Teilchen im Speichermedium so vorgesehen sind, dass diese zusammen eine statistische Verteilung der Koerzitivfeldstaerke der einzelnen Teilchen ergeben, die im Bereiche eines Wertes maximal auftretender Teilchen erweitert oder verbreitert ist, wenn man zum Vergleich eine Gauss'sche Verteilung der Koerzitivfeldstaerken der Teilchen heranzieht. Beispielsweise soll die Kruemmung der Kurve der Verteilung im Bereiche eines Wertes maximal auftretender Teilchen moeglichst klein sein gegenueber der natuerlichen (gauss'schen) Verteilungskurve.

Die durch die Erfindung erreichten Vorteile sind im wesentlichen darin zu sehen, dass bisher uebliche Werte fuer die Magnetisierung des Speichermediums weit uebertroffen werden koennen. Konnte man bisher nur ca. 30% der maximal moeglichen Magnetisierung des Speichermediums ausnuetzen, wenn man fuer den Klirrfaktor nicht mehr als 3% zuliess, so sind gemaess der Erfindung ca. 90% moeglich. Dies ergibt einen um 6 bis 9 dB hoeheren Pegel im Speichermedium. Damit wird aber auch der Rauschabstand wesentlich vergroessert und die Dynamik verbessert. Zusammen mit anderen heute moeglichen Verbesserungen wird die analoge Aufzeichnung von Signalen damit praktisch so gut wie deren auf 16 Bit aufgeloeste digitalisierte Aufzeichnung. Dabei bleiben die typischen Vorteile der analogen Aufzeichnung aber bestehen.

Im folgenden wird die Erfindung anhand von lediglich einen Ausfuehrungsweg darstellenden Zeichnungen naeher erlaeutert. Es zeigt:

Figur 1 eine Gauss'sch Verteilung magnetisierter Teilchen,

Figur 2 eine Schar von Magnetisierungskennlinien,

Figur 3 mehrere Verteilungskurven,

Figur 4 eine weitere Schar Magnetisierungskennlinien,

Figur 5 eine weitere Schar von Verteilungskurven,

Figur 6 Magnetisierungskennlinien fuer Verteilungen magnetisierter Teilchen gemaess Fig. 5 und

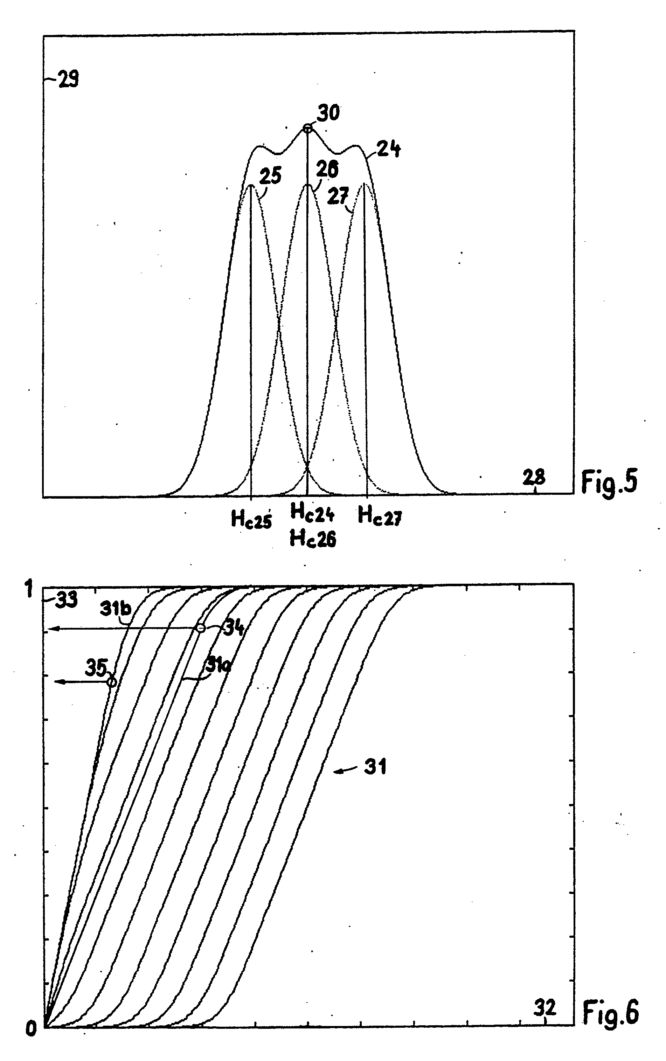

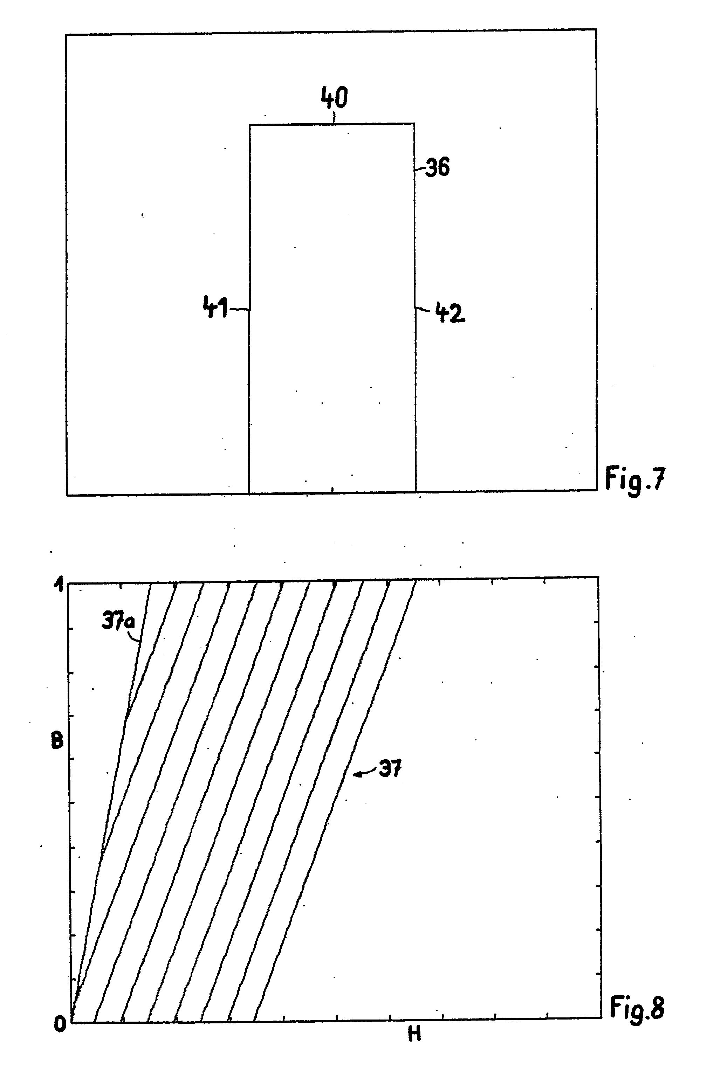

Figuren 6 und 7 eine weitere Verteilungskurve und Magnetisierungskennlinien dazu.

Die Erfindung, und damit auch die nachfolgenden Ausfuehrungen, gehen von einem Magnetisierungsmodell aus, wie es in IEEE Transactions on Magnetics, Vol.Mag-15, No.1, January 1979 unter dem Titel "Nonlinear Distortion in Long Wavelenght AC Bias Recording" (Tatsuo Fujiwara) beschrieben ist. Dieses Modell geht davon aus, dass gleichartige magnetisierte Teilchen, die eine mittlere Koerzitivfeldstaerke $H_c$ aufweisen, eine Streuung aufweisen, die einer Gauss'schen Verteilungsfunktion entspricht.

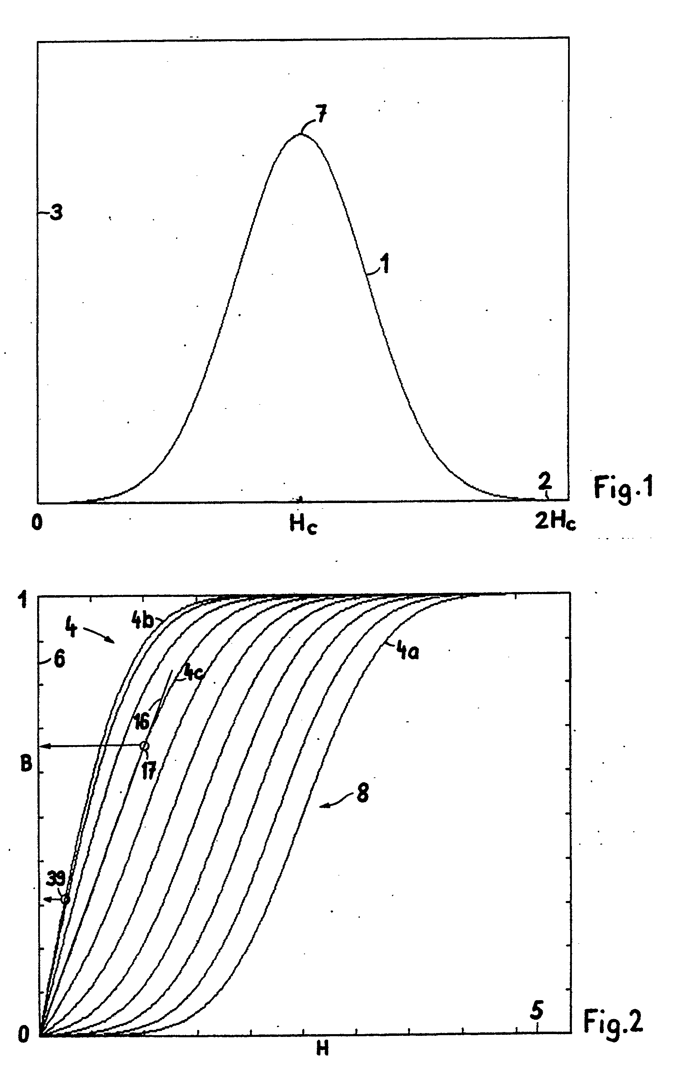

Figur 1 zeigt eine solche Gauss'sche Verteilungskurve 1' die ueber einer horizontalen Achse 2 aufgetragen ist. Auf dieser Achse 2 sind Werte fuer die Koerzitivfeldstaerke H aufgetragen. $H_c$ sei die mittlere Koerzitivfeldstaerke der Teilchen der Verteilung entsprechend Verteilungskurve 1. Auf einer vertikalen Achse 3 ist die Anzahl Teilchen aufgetragen.

Figur 2 zeigt Magnetisierungskennlinien 4 deren Ermittlung aus der obengenannten Veroeffentlichung bekannt ist und die fuer das genannte Magnetisierungsmodell gelten. Auf einer horizontalen Achse 5 sind Werte fuer die Feldstaerke H eines Gleichstromfeldes einer polaritaet aufgetragen. Dieses Gleichstromfeld entspricht dem Feld, das durch das aufzuzeichnende Signal, beispielsweise einem Strom in einem Aufnahmekopf, erzeugt wird. Dieses Feld ist in Wirklichkeit kein Gleichstromfeld. Es ist als Momentanwert eines aufzuzeichnenden Wechselfeldes zu verstehen. Deshalb ist es hier einfachheitshalber als Gleichstromfeld bezeichnet. Auf einer vertikalen Achse 6 ist die relative Magnetisierung der Teilchen des Speichermediums oder die magnetische Flussdichte B einer polaritaet aufgetragen und zwar mit Werten von Null bis Eins. Der Wert Eins bedeutet somit Saettigung. Jeder der Kennlinien 4 ist ein Wert Euer die Feldstaerke des Vormagnetisierungsfeldes zugeordnet. Einer Kennlinie 4a ist eine relative Vormagnetisierungsfeldstaerke 0 und einer Kennlinie 4b ist eine relative Vormagnetisierungsfeldstaerke 1 zugeordnet. Die uebrigen Kennlinien 4 sind Schritten der Vormagnetisierungsfeldstaerke von 0.1 zugeordnet. Vormagnetisierungsfeldstaerke 0 bedeutet, dass gar keine Vormagnetisierung vorliegt. Vormagnetisierungsfeldstaerke 1 bedeutet, dass die Feldstaerke der Vormagnetisierung so gross ist wie der mittlere Wert der Koerzitivfeldstaerke die notwendig ist, um die Teilchenmenge umzumagnetisieren. Fuer eine Teilchenmenge wie sie durch die Verteilungskurve 1 in Fig. 1 dargestellt ist, betraegt dieser Wert gerade $H_c$.

Sucht man in diesen Kennlinien 4 diejenige Kennlinie, die ueber die groesste Strecke gerade verlaeuft, so ergibt dies denjenigen Betriebsfall, bei dem der Zusammenhang zwischen dem erregenden Signal feld oder Magnetfeld und der aufgezeichneten Magnetisierung am weitesten linear ist. Hier trifft dies etwa fuer eine Kennlinie 4c zu. Daran angelegt ist auch eine Tangente 16 durch den Nullpunkt. Man erkennt dabei, dass die Kennlinie 4c dieser Tangente 16 bis zu einem Punkt 17 folgt. Das bedeutet nun, dass beste Linearitaet der erwaehnten Beziehung bei Gauss'scher Verteilung der Koerzitivfeldstaerke der Teilchen gemaess Fig. 1 fuer eine Vormagnetisierungsfeldstaerke zutrifft, die dem 0.7-fachen der Feldstaerke entspricht, die das aufzuzeichnende Signal erzeugt. Damit ist etwa 66% der maximal moeglichen Magnetisierung ausgenuetzt, wie man dies auf der Achse 6 ablesen kann. Fuer einsolches Speichermedium waere demnach die Vormagnetisierung relativ zum Signal feld so einzustellen. Diese Betrachtung gilt genau genommen aber nur fuer einen duennen Bereich oder eine duenne Schicht innerhalb einer magnetisierbaren Schicht auf dem Speichermedium in dem magnetisierbare Teilchen vorhanden sind. Benachbarte Bereiche oder andere duenne Schichten innerhalb der magnetisierbaren Schicht, werden staerker magnetisiert, wenn sie sich nae her an der Quelle des Feldes (z.B. dem Magnetkopf) befinden und umgekehrt. Da staerkere Felder asymptotisch zur Kurve 4b fuehren, bekommt diese Kurve ein groesseres Gewicht, wenn die Wirkung der Bereiche ueber die ganze Dicke der magnetisierbaren Schicht integriert wird. Deshalb wird man in der Praxis den Betriebsfall eher auf der Kennlinie 4b waehlen. Diese ist aber nur etwa bis zu einem Punkt 39 gerade genug. Das bedeutet, dass man so etwa 30% der maximal moeglichen Magnetisierbarkeit ausnuetzen kann, wenn nur geringe Verzerrungen zugelassen sind. Dies entspricht dem Stand der Technik.

Zwischen den Figuren 1 und 2 besteht ein Zusammenhang. Der maximale Wert 7 bei der Koerzitivfeldstaerke $H_c$ in Fig. 1 bestimmt die maximale Steilheit der Kennlinien 4 in Fig. 2 in einem Bereich 8. Geht man ferner davon aus, dass eine Menge vorliegender magnetisierter Teilchen, die zusammengerechnet eine mittlere Feldstaerke vom Betrag 0 ergeben, aus einer Teilmenge positiv magnetisierter Teilchen und einer Teilmenge negativ magnetisierter Teilchen mit mittleren Koerzitivfeldstaerken $+H_c$ und $-H_c$ zusammengesetzt ist, die beide gemaess einer Gauss'schen Verteilungsfunktion um die Werte $+H_c$ und $-H_c$ streuen so gilt auch folgendes:

Je groesser die Feldstaerke des aufzuzeichnenden Feldes oder Signales ist, desto mehr Teilchen der einen Teilmenge werden Ummagnetisiert und desto mehr Teilchen der anderen Teilmenge werden nicht ummagnetisiert (Siehe auch Fig. 1 der obengenannten Veroeffentlichung). Das Integral ueber die Feldstaerke der ummagnetisierten Teilchen ergibt die Kennlinien 4. Der Verlauf der Kennlinie 4a beispielsweise, die einer Magnetisierung ohne Vormagnetisierung zugeordnet ist, entspricht dem Integral ueber die Verteilungskurve 1 der Fig. 1.

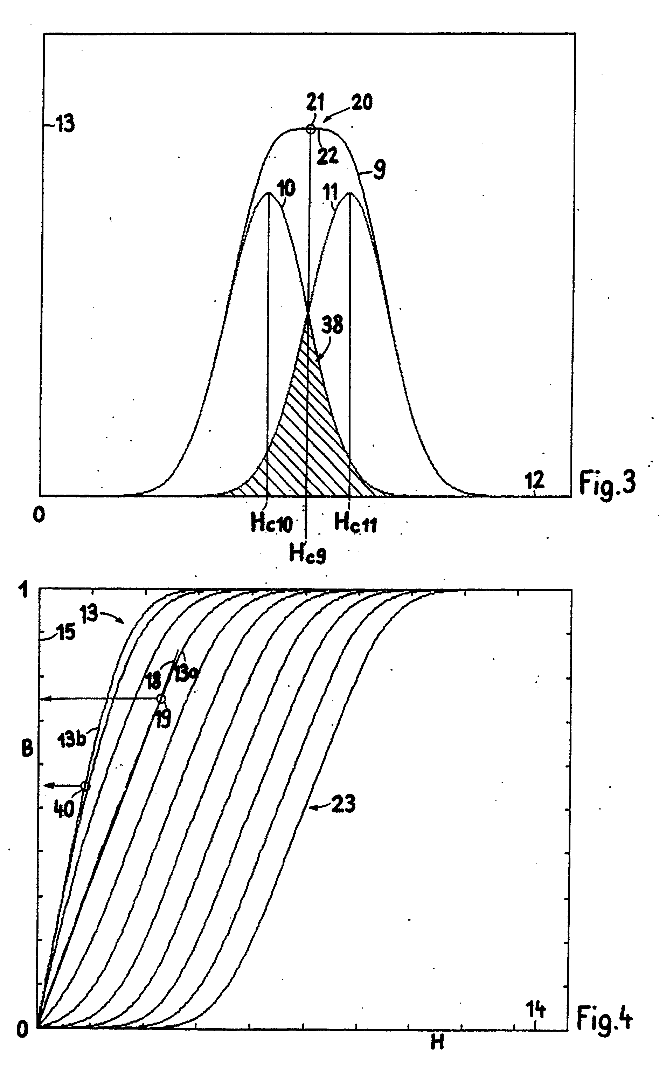

Figur 3 zeigt weitere Verteilungskurven 9, 10 und 11 von Koerzitivfeldstaerken von Teilchen aehnlich der Verteilungskurve 1 in Fig. 1. Achsen 12 und 13 entsprechen dabei den Achsen 2 und 3 aus Fig. 1. Die Verteilungskurven 10 und 11 sind Gauss'sche Verteilungskurven fuer zwei Teilmengen oder Sorten unterschiedlicher magnetischer Teilchen. Fuer jede Teilmenge ist eine mittlere Koerzitivfeldstaerke $H_{c10}$ und $H_{c11}$ eingezeichnet. Fuer die gesamte Menge der Teilchen, Euer die die Verteilungskurve 9 steht, ist eine mittlere Koerzitivfeldstaerke $H_{c9}$ eingezeichnet. Beide Verteilungskurven 10 und 11 ueberschneiden sich in einem Bereich 38. Man erkennt auch, dass die Verteilungskurve 9 in einem Bereiche 20 um einen maximalen Wert 21 gegenueber der Gauss'schen Verteilungskurve 7 verbreitert ist oder einen horizontalen Abschnitt 22 mit geringer Kruemmung aufweist.

Figur 4 zeigt nach den gleichen Grundsaetzen wie fuer Figur 2 abgeleitete Kennlinien 13 Euer die Magnetisierung ueber Achsen 14 und 15 aufgetragen, die den Achsen 5 und 6 der Fig. 2 entsprechen. Auch hier sind elf Kennlinien 13 fuer Werte von Null bis Eins der Feldstaerke des Vormagnetisierungsfeldes vorgesehen. Diese Kennlinien 13 beziehen sich auf die gesamte Menge der Teilchen im Speichermedium und somit auf die Verteilungskurve 9 in Fig. 3. Man erkennt bereits, dass die Kennlinien 13 laengere gerade Bereiche 23 als die geraden Bereiche 8 der Kennlinien 4 in Fig. 2 aufweisen.

Sucht man hier den optimalen Betriebsfall, so findet man ihn im Bereiche einer Kennlinie 13a, an die auch eine Tangente 18 angelegt ist. Die Kennlinie 13a folgt der Tangente 18 bis zu einem Punkt 19 gut. Auf der Achse 15 liest man ab, dass damit etwa 75% der maximal moeglichen Magnetisierung ausgenuetzt werden kann bei gewahrter Linearitaet. Die Aussteuerung des Speichermediums kann somit vom Nullpunkt bis zum Punkt 19 erfolgen Euer die Magnetisierung mit der einen Polaritaet und bis zu einem entsprechenden Punkt der anderen Polaritaet in einem hier nicht naeher dargestellten aber dazu punktsymmetrischen Bereich. Dies gilt fuer die Darstellung in Fig. 2 wie auch fuer die nachfolgend beschriebene Fig. 6 und 8. Sucht man aber den Betriebsfall auf einer Kennlinie 13b, so kann die Magnetisierung bis zum Punkt 40 erfolgen was ca. 55% der maximal moeglichen Magnetisierung entspricht, und zwar ohne weitere Nachteile.

Figur 5 zeigt weitere Verteilungskurven 24, 25, 26 und 27, die ueber Achsen 28 und 29 aufgezeichnet sind, die den Achsen 2 und 3 in Fig. 1 entsprechen. Jeder Verteilungskurve ist auch in nun bekannter Weise eine mittlere Koerzitivfeldstaerke $H_{c24}$, $H_{c25}$, $H_{c26}$ und $H_{c27}$ zugeordnet. Auch in diesem Fall ist die Verteilungskurve 24, die die Verteilung aller Teilchen angibt, im Bereiche eines Maximalwertes 30 der Teilchenzahl gegenueber einer reinen Gauss'schen Verteilungskurve verbreitert.

Figur 6 zeigt fuer eine Teilchenmenge die aus drei Sorten mit unterschiedlichen Eigenschaften besteht, und fuer welche Fig. 5 Verteilungskurven zeigt, Magnetisierungskennlinien 31, die ueber Achsen 32 und 33 aufgezeichnet sind, wie sie bereits aus der Figur 2 als Achsen 5 und 6 bekannt sind. Auch hier sind elf Kennlinien 31 fuer Werte von Null bis Eins der Feldstaerke des Vormagnetisierungsfeldes vorgesehen. Diese Kennlinien 31 beziehen sich auf die gesamte Menge der Teilchen des Speichermediums und somit auf die Verteilungskurve 24 aus Fig. 5.

Sucht man hier den optimalen Betriebsfall, so findet man ihn auf der zusaetzlich eingezeichneten Kennlinie 31a, die bis zu einem Punkt 34 linear ist. Damit lassen sich ueber 90% der maximal moeglichen Magnetisierung ausnuetzen. Ein weiterer guter Betriebsfall findet sich auf einer Kennlinie 31b, bei der bis zu einem punkt 35 gegen 80% der maximal moeglichen Magnetisierung ausgenuetzt werden kann. Durch die Wahl des Betriebsfalles auf der Kennlinie 31b erspart man sich andere bekannte Probleme. Gegenueber dem Stand der Technik, wie er aus der Figur 2 ersichtlich ist, ist die Verbesserung aber beachtlich.

Figur 7 zeigt eine Verteilungskurve 36 nun bekannter Art, die sich ergibt, wenn eine genuegend grosse Anzahl verschiedener Sorten von Teilchen fuer das Speichermedium verwendet werden. Sie stellt ein Ideal dar, das in der Praxis kaum erreicht werden kann. Es ist wichtig, dass die Kurve oben in einem Bereiche 40 moeglichst horizontal und moeglichst glatt verlaeuft, um gute Linearitaet der Aufzeichnung zu erreichen. Die steilen Flanken 41 und 42 stellen sicher, dass keine Teilchen mit sehr geringer Koerzitivkraft vorhanden sind, welche eine schlechte Kopierdaempfung ergeben und dass keine Teilchen mit sehr grosser Koerzitivkraft vorhanden sind, die schwer loeschbar sind.

Figur 8 zeigt die zu der Verteilungskurve 36 gemaess Figur 7 gehoerenden elf Magnetisierungskennlinien 37. Daraus sieht man, dass nur eine Kennlinie 37a einen optimalen Betriebsfall erlaubt.

Der Aufbau eines Speichermediums oder eines Aufzeichnungstraegers ist an sich aus vielen Beispielen bekannt, da solche Speichermedien in grosser Zahl vielen Variationen im Handel erhaeltlich sind. Es ist ueblich darin unter sich gleichartige magnetische Teilchen zu verwenden. Diese Teilchen koennen in ihrer chemischen Zusammensetzung gleichartig sein. Dann unterscheidet man unter Ferriten, Chromdioxyden, Reinmetallen usw. Die Teilchen koennen gleichartig in bezug auf ihren physikalischen Aufbau sein. Dann ist dieser Aufbau beispielsweise kristallin, nadelfoermig, kubusfoermig usw. Man kann auch die Teilchengroesse oder die Ausrichtung der Teilchen unter sich gleich machen. Weiter kann man den Teilchen die gleiche geometrische Form und Abmessung geben.

Um nun in den Genuss der erfindungsgemaessen Vorteile zu gelangen, soll demnach das Speichermedium so beschaffen sein, dass es Teilchen enthaelt, die derartige magnetische Eigenschaften aufweisen, dass sich daraus eine Verteilung der Koerzitivfeldstaerke ergibt, die im Bereiche eines Maximalwertes gegenueber einer Gauss'schen Verteilung abweicht, wie dies der Vergleich der Verteilungskurven 9, 24, 36 mit der Verteilungskurve 1 zeigt. Desto breiter diese Verteilungskurven im oberen Bereich sind, desto besser laesst sich die Magnetisierbarkeit des Speichermediums ausnuetzen ohne Verzerrungen zu erzeugen. Um dies zu erreichen sollten mindestens zwei, vorzugsweise aber auch mehr, Sorten von magnetischen Teilchen im Speichermedium vorhanden sein. Diese Sorten sind so zu waehlen, dass sich fuer jede Sorte von Teilchen eine eigene Verteilung der Koerzitivfeldstaerken der einzelnen Teilchen ergibt, deren mittlerer Wert vom mittleren Wert der anderen Sorte so weit weg liegt, dass die Verteilungskurve beider Sorten gemeinsam einen moeglichst breiten oberen Bereich 20 aufweist, der auch einen unebenen Verlauf der Verteilungskurve haben kann, sofern die Variationen gegenueber der maximalen Amplitude der Verteilungskurve klein bleiben, wie dies beispielsweise die Figur 5 in der Umgebung des Punktes 30 zeigt. Daraus ergibt sich das Mass fuer die Abweichung der mittleren Koerzitivfeldstaerken der einzelnen Sorten zueinander.

Es ist vorteilhaft, wenn die Verteilungskurven in sich symmetrisch sind. Weitere Einfluesse die bei der Ummagnetisierung auftreten koennen, koennen bewirken, dass die Verteilungskurven nicht symmetrisch sind. Beispielsweise ist dann eine Seite der Verteilungskurve steiler als die andere Seite. Dies ist in der anfangs erwaehnten Modellvorstellung nicht beruecksichtigt. Als Abhilfe koennte man versuchen, Sorten von Teilchen so zu erzeugen, dass die Verteilungskurve von Anfang an unsymmetrisch ist und zwar so, dass die obengenannten Einfluesse dann bewirken, dass die Verteilungskurve bei der Ummagnetisierung symmetrisch wird. Wenn aber moeglichst rechteckfoermige verteilungskurven (siehe Fig. 7) angestrebt werden, sollten sich die genannten Einfluesse auch kaum bemerkbar machen.

Es ist ferner dieser Erfindung zugrundegelegt, dass innerhalb einer Sorte alle Teilchen moeglichst gleichartig sein sollen. Sie sollen also den gleichen chemischen, physikalischen Aufbau haben oder sie sollen die gleiche geometrische Form usw. haben. Auch wenn dies bei der Herstellung solcher Teilchen angestrebt wird, werden sie nicht unter allen Gesichtspunkten 100%ig identisch sein. Sie werden beispielsweise identischen chemisch/physikalischen Aufbau haben aber deren Abmessungen werden Streuungen unterworfen sein. Dies ist dann auch zulaessig und fuehrt zu der beispielsweise Gauss'schen Verteilung der Koerzitivfeldstaerke der einzelnen Teilchen.

Es ist ebenfalls denkbar, solche Speichermedien mit mehreren Schichten mit magnetischen Teilchen vorzusehen. Dann soll aber in jeder Schicht der vorgeschlagene Aufbau mit Teilchen von zwei oder mehr Sorten fuer sich erfolgen. Fuer mindestens ein Schicht sollen die Teilchen bzw. deren Koerzitivfeldstaerke die vorgeschlagene Verteilung ergeben.

## Ansprüche

1. Magnetisches Speichermedium zum Speichern analoger Signale, mit magnetisierten Teilchen, deren Koerzitivfeldstaerke eine Streuung um einen mittleren Wert ($H_c$) aufweist, dadurch gekennzeichnet, dass mindestens zwei Sorten von Teilchen vorgesehen sind, dass jeder Sorte eine mittlere Koerzitivfeldstaerke ($H_{c10}$, $H_{c11}$) zugeordnet ist, die sich aus den Koerzitivfeldstaerken der einzelnen Teilchen dieser Sorte ergibt und dass fuer jede Sorte die mittlere Koerzitivfeldstaerke von der mittleren Koerzitivfeldstaerke der anderen Sorte abweicht.

2. Magnetisches Speichermedium nach Anspruch 1, dadurch gekennzeichnet, dass die Koerzitivfeldstaerke der einzelnen Teilchen einer Sorte eine Gauss'sche Verteilung (7, 10, 11) aufweist und dass sich daraus ergebende Verteilungskurven Euer die einzelnen Sorten teilweise ueberschneiden.

3. Magnetisches Speichermedium nach Anspruch 1, dadurch gekennzeichnet, dass die mittleren Koerzitivfeldstaerken der einzelnen Sorten so voneinander abweichen, dass ueber alle Sorten gesehen sich eine Verteilungskurve (9, 36) ergibt, die im Bereiche einer ueber alle Sorten berechneten mittleren Koerzitivfeldstaerke ($H_{c9}$) einen im wesentlichen flachen Verlauf aufweist.

4. Magnetisches Speichermedium nach Anspruch 1, dadurch gekennzeichnet, dass die Teilchen einer Sorte unter sich einen gleichen chemisch/physikalischen Aufbau haben und dass dieser Aufbau vom Aufbau der Teilchen anderer Sorten abweicht.

5. Magnetisches Speichermedium nach Anspruch 1, dadurch gekennzeichnet, dass die Teilchen einer Sorte unter sich gleiche Form aufweisen und dass diese Form vom der Form der Teilchen anderer Sorten abweicht.

6. Magnetisches Speichermedium nach Anspruch 1, wobei die magnetisierten Teilchen in mehreren Schichten angeordnet sind, dadurch gekennzeichnet, dass fuer mindestens eine Schicht die statistische Verteilung der Koerzitivfeldstaerken gegenueber einer Gauss'schen Verteilung, im Bereiche des am haeufigsten auftretenden Wertes der Koerzitivfeldstaerke verbreitert ist.

Fig.1

Fig.2

Fig.3

Fig.4

Fig.5

Fig.6

40

36

41

42

Fig.7

1

37a

B

37

0

H

Fig.8